# FASCICULE DE BREVET EUROPEEN

(11) **EP 3 656 598 B1**
(45) Date de publication et mention de la délivrance du brevet: **07.12.2022**
(21) Numéro de dépôt: 19210749.8
(22) Date de dépôt: 21.11.2019
(51) Int. Cl.: B60K 35/00, B60K 37/06, G09G 3/00

(54) **SYSTÈME D'AFFICHAGE ÉLECTRONIQUE D'IMAGES POUR POSTE DE PILOTAGE DE VÉHICULE POSSÉDANT UNE ZONE D'AFFICHAGE DE FORME DÉVELOPPABLE**
ELEKTRONISCHES BILDANZEIGESYSTEM FÜR FÜHRERSTAND EINES FAHRZEUGS, DER EINE WEITERENTWICKELBARE ANZEIGEZONE UMFASST
SYSTEM FOR ELECTRONIC DISPLAY OF IMAGES FOR STATION FOR CONTROLLING A VEHICLE HAVING A DISPLAY AREA WITH DEVELOPABLE SHAPE

(30) Priorité: 23.11.2018 FR 1871754
(43) Date de publication de la demande: 27.05.2020
(73) Titulaire: Thales, 92400 Courbevoie (FR)
(72) Inventeur: BECOUARN, Loïc, 33700 MERIGNAC (FR); MENNECHET, Florent, 33700 MERIGNAC (FR); BOTA, Valéry, 33700 MERIGNAC (FR)
(74) Mandataire: Lavoix

(56) Documents cités:
- CA-A1- 2 837 631
- DE-A1-102015 009 141
- US-A1- 2017 337 871

## Description

La présente invention concerne le domaine des systèmes d'affichage pour poste de pilotage de véhicule, par exemple pour poste de pilotage d'aéronef.

Dans les systèmes d'affichage pour poste de pilotage d'aéronef, une tendance actuelle est de prévoir des écrans d'affichage tactiles et d'augmenter la taille de ces écrans d'affichage.

Cependant, le simple remplacement d'écrans d'affichage existants par des écrans d'affichage tactiles plus grands conduit à des problèmes d'agencement des écrans d'affichage et d'ergonomie du poste de pilotage, notamment pour les postes de pilotage pour deux pilotes qui sont configurés pour être utilisés par deux pilotes assis côte-à-côte et partageant en partie le même système d'affichage. Cette problématique est également présente dans le cas de poste de pilotage mono-pilote où des écrans tactiles plats ne permettent pas une utilisation optimale de l'espace disponible.

En outre, les systèmes d'affichage pour poste de pilotage d'aéronef doivent respecter des normes en termes d'espace disponible pour chaque pilote, d'accessibilité des différentes fonctions pour chaque pilote, de pénibilité pour l'accès aux différentes fonctions pour chaque pilote et de visibilité vers l'extérieur, le système d'affichage ne devant pas entraver la vision du pilote ou des pilotes vers l'extérieur de l'aéronef.

Par ailleurs, le système d'affichage doit être fiable et réalisable à un coût acceptable dans la perspective d'une industrialisation.

US2017337871A1 et DE10009141A1 divulguent des systèmes d'affichage pour véhicule comprenant des surfaces d'affichage tridimensionnelles non-plane.

Un des buts de l'invention est de proposer un système d'affichage pour poste de pilotage de véhicule qui soit ergonomique et qui puisse être produit à un coût raisonnable.

A cet effet, l'invention propose un système d'affichage selon la revendication 1.

Des caractéristiques optionnelles du système d'affichage sont définies aux revendications 2 à 10.

L'invention concerne également un poste de pilotage selon la revendication 11.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique en perspective d'un poste de pilotage individuel comprenant un système d'affichage électronique d'images ;
- la Figure 2 est une vue schématique en perspective d'un poste de pilotage pour deux pilotes, comprenant un système d'affichage électronique d'images ;
- la Figure 3 est une vue schématique en perspective d'un poste de pilotage pour deux pilotes, comprenant un système d'affichage électronique d'images avec plus d'écrans que dans la figure 2 ;
- Figure 4 est une vue schématique de dessus d'une zone d'affichage d'un système d'affichage électronique d'images pour un poste de pilotage individuel ; et
- la Figure 5 est une vue schématique en section de la zone d'affichage, selon V-V sur la Figure 4.

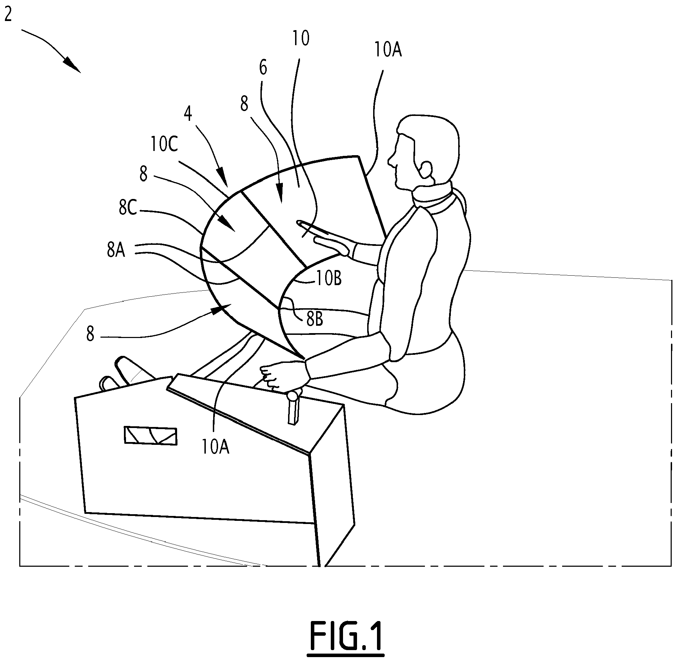

Le poste de pilotage 2 de la Figure 1 est un poste de pilotage de véhicule, par exemple un poste de pilotage d'un aéronef. L'aéronef est par exemple un avion, un drone (i.e. un aéronef sans pilote humain à bord) ou un hélicoptère.

Dans une variante, le poste de pilotage est un poste de pilotage d'un véhicule ferroviaire, d'un véhicule maritime, par exemple un bâtiment de surface ou un sous-marin, ou d'un véhicule routier, par exemple une voiture ou un camion.

Le poste de pilotage 2 est situé dans le véhicule ou hors du véhicule et configuré pour le pilotage du véhicule à distance, comme par exemple dans le cas du drone.

Le poste de pilotage 2 comprend un système d'affichage électronique d'images 4 configuré pour l'affichage d'images. Le système d'affichage 4 est utilisable par exemple pour l'affichage de paramètres de pilotage du véhicule.

Dans le cas d'un aéronef, le système d'affichage 4 est généralement configuré pour l'affichage de données telles que celles de pilotage, de navigation ou représentant l'état des systèmes (moteurs, hydraulique, électrique,...).

Le système d'affichage 4 possède une surface d'affichage d'images 6 tridimensionnelle qui est définie par un seul écran d'affichage électronique d'images 8 ou plusieurs écrans d'affichage électronique d'images 8 jointifs.

Chaque écran d'affichage 8 est configuré pour générer des images. Chaque écran d'affichage 8 comprend par exemple un ensemble de pixels répartis sur l'écran d'affichage 8 et configurés pour émettre de la lumière de manière à générer ensemble une image perceptible par un observateur.

Dans un exemple de réalisation, chaque écran d'affichage 8 est par exemple électroluminescent, par exemple un écran à diodes électroluminescentes (ou LED pour *« Light Emitting Diode* » en anglais), en particulier un écran à diodes électroluminescentes organiques (ou OLED pour « *Organic Light Emitting Diode* » en anglais).

Dans un exemple de réalisation, permettant notamment l'absence de bordure visible, chaque écran d'affichage 8 est un écran à micro-diodes électroluminescentes (ou écran micro-LED). De manière connue, les diodes électroluminescentes d'un écran micro-LED génère de la lumière à partir d'un matériau inorganique.

Dans un autre exemple de réalisation chaque écran pourrait mettre en œuvre une technologie plus classique à cristaux liquides ou LCD pour « *Liquid Crystai Display* » en anglais.

Dans un exemple de réalisation, chaque écran d'affichage 8 est dépourvu de bordure visible de telle sorte que l'ensemble de la surface d'affichage 6 parait continue pour l'utilisateur. De tels écrans d'affichage 8 dépourvus de bordure visible sont par exemple des écrans à Micro-LED.

De préférence, la surface d'affichage 6 est au moins en partie tactile, et en particulier entièrement tactile. Pour ce faire au moins un ou chaque écran d'affichage 8 est tactile.

Le caractère tactile de la surface d'affichage 6 permet à chaque pilote d'interagir avec le système d'affichage 4, soit pour configurer l'affichage des données sur la surface d'affichage 6, soit pour interagir avec et/ou commander des systèmes embarqués du véhicule, tels que des systèmes de mesure ou des systèmes de propulsions, des systèmes de guidage...

La surface d'affichage 6 comprend au moins une zone d'affichage courbe 10 ayant la forme d'une surface développable, en particulier une portion de surface conique, encore plus en particulier une portion de surface conique de révolution.

Chaque zone d'affichage courbe 10 est tridimensionnelle. Chaque zone d'affichage courbe 10 est non-plane. Chaque zone d'affichage courbe 10 est de préférence dépourvue de cassure ou d'arête.

Une surface développable est par définition une surface réglée, i.e. formée d'une infinité de droites génératrices, dont toute droite génératrice est stationnaire, c'est-à-dire telle que le plan tangent à la surface développable est le même en tout point de la droite génératrice

Une surface conique (ou cône) est par définition une surface réglée générée par des droites génératrices passant par un point fixe appelé sommet et un point variable décrivant une courbe appelée courbe directrice.

Une surface conique désigne ici une surface non-cylindrique. Une surface cylindrique n'est pas considérée ici comme une surface conique.

Dans la suite de la description, par souci de concision, sauf indication contraire, l'expression « zone d'affichage courbe » désigne une zone d'affichage courbe ayant la forme d'une surface développable, et en particulier d'une portion de surface conique.

Par ailleurs, l'expression « droite génératrice » désigne une droite génératrice de la surface développable, et en particulier dans le cas d'une surface conique, une droite génératrice passant par le sommet de la surface conique et par la courbe directrice de la surface conique.

Une surface conique de révolution (ou « surface conique circulaire droite ») est une surface conique possédant un sommet situé sur un axe de révolution et une courbe directrice circulaire située dans un plan perpendiculaire à l'axe de révolution et dont le centre est situé sur l'axe de révolution. Dans un exemple de réalisation, au moins une ou chaque zone d'affichage courbe 10 a la forme d'une portion de surface conique de révolution, délimitée entre deux plans parallèles perpendiculaire à l'axe de révolution de la surface conique de révolution, et deux droites directrices de la surface conique de révolution.

Une telle zone d'affichage courbe 10 correspond à une fraction de la surface latérale d'un tronc de cône de révolution.

Une telle zone d'affichage courbe 10 est délimitée par deux bords rectilignes 10A opposés et deux bords curvilignes 10B, 10C opposés.

Les deux bords rectilignes 10A correspondant à deux droites directrices de la surface tronconique de révolution,

Les deux bords curvilignes 10B, 10C sont des arcs de cercles de rayons différents et de longueurs différentes. Les deux bords curvilignes 10B, 10C sont centrés sur l'axe de révolution de la surface conique de révolution.

Lorsque la zone d'affichage courbe 10 est concave, comme c'est le cas sur la Figure 1, de préférence, le bord curviligne 10B court et le bord curviligne 10C long définissent respectivement le bord inférieur et le bord supérieur de la zone d'affichage courbe 10.

Lorsque la zone d'affichage courbe 10 est convexe, de préférence, le bord curviligne court et le bord curviligne long définissent respectivement le bord supérieur et le bord inférieur de la zone d'affichage courbe 10.

Chaque zone d'affichage courbe 10 de la surface d'affichage est de préférence orientée vers le haut. Ainsi, le pilote assis à son poste de pilotage peut regarder la zone d'affichage 10 en regardant obliquement vers le bas.

L'axe de révolution de la surface conique de révolution, dont la zone d'affichage courbe 10 forme une portion, est de préférence sensiblement vertical.

Chaque écran d'affichage 8 définissant une zone d'affichage courbe 10 est lui-même courbe et a la forme d'une surface développable, et en particulier une portion de surface conique, et encore plus en particulier la forme d'une portion de surface conique de révolution.

Dans un exemple de réalisation particulier, au moins un ou chaque écran d'affichage 8 a la forme d'une portion de surface conique de révolution délimité entre deux plans parallèles perpendiculaire à l'axe de révolution de la surface tronconique de révolution, et deux droites directrices de la surface conique de révolution.

Chaque écran d'affichage 8 de ce type correspond à une fraction de la surface latérale d'un tronc de cône de révolution ;

Chaque écran d'affichage 8 de ce type est délimité par deux bords rectilignes 8A opposés correspondant à deux droites directrices de la surface conique de révolution, et deux bords curvilignes 8B, 8C opposés.

Les deux bords curvilignes 8B, 8C opposés sont des arcs de cercles de rayons différents et de longueurs différentes. Les deux bords curvilignes 8B, 8C sont centrés sur l'axe de révolution de la surface tronconique de révolution.

Dans l'exemple de réalisation illustré sur la Figure 1, la zone d'affichage courbe 10 de la surface d'affichage 6 est formée de trois écrans d'affichage 8 qui sont chacun une portion de surface conique de révolution, disposés côte à côte et jointifs par leurs bords rectilignes 8A respectifs.

Les bords curvilignes 8B courts des écrans d'affichage 8 se prolongent pour former le bord curviligne 10B court de la zone d'affichage courbe 10, et les bords curvilignes 8C longs des écrans d'affichage 8 se prolongent pour former le bord curviligne 10C long de la zone d'affichage courbe 10.

La zone d'affichage courbe 10 est plus étendue angulairement autour de l'axe de révolution de la surface conique de révolution dont la zone d'affichage courbe 10 est une portion, que chacun des écrans d'affichage 8 formant la zone d'affichage courbe 10.

Avantageusement, au moins deux écrans d'affichage 8 formant une même zone d'affichage courbe 10, et en particulier, comme illustré sur la Figure 1, tous les écrans d'affichage 8 formant une même zone d'affichage courbe 10, sont identiques.

Ceci permet de construire la zone d'affichage courbe 10 qui est une développable, et en particulier une portion de surface conique, de façon modulaire à partir d'écrans d'affichage 8 identiques, en adaptant le nombre d'écrans d'affichage 8 en fonction de l'étendue souhaitée pour la zone d'affichage courbe 10 qui est une surface développable, et en particulier une portion de surface conique.

Les écrans d'affichages 8 sont ici au nombre de trois, mais bien entendu, dans des variantes possibles, une zone d'affichage courbe est formée d'un écran d'affichage, de deux écrans d'affichage jointifs ou de plus de trois écrans d'affichage jointifs. Le nombre exact d'écrans dépend, entre autres, des exigences de disponibilité de l'information en cas de panne d'un des écrans ou de l'espace disponible dans le cockpit.

Dans l'exemple de réalisation de la Figure 1, la surface d'affichage 6 comprend une seule zone d'affichage courbe 10 qui est concave.

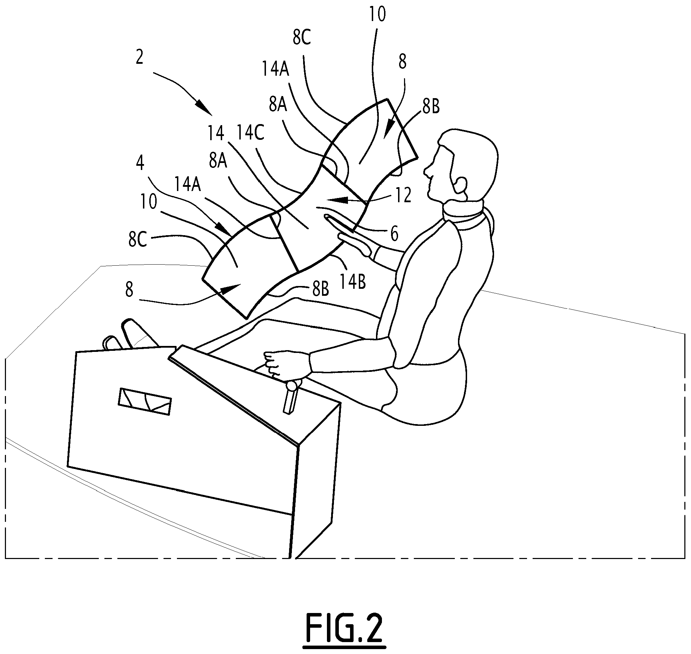

Le poste de pilotage de la Figure 2 diffère de celui de la Figure 1 en ce que la surface d'affichage 8 possède plusieurs zones d'affichage courbes 10, 12 distinctes, incluant ici une zone d'affichage courbe 12 convexe, située entre deux zones d'affichage courbes 10 concaves.

Le poste de pilotage de la Figure 2 est par exemple prévu pour deux pilotes assis côte à côte.

Chaque zone d'affichage courbe 10 concave définit une zone d'affichage dédiée à un pilote et située devant ce pilote, et la zone d'affichage courbe 12 convexe définit une zone d'affichage située entre les pilotes et partagée par les pilotes.

Dans l'exemple de réalisation de la Figure 2, chaque zone d'affichage courbe 10, 12 a la forme d'une surface développable, en particulier une portion de surface conique, plus particulièrement ici une portion de surface conique de révolution, délimitée entre deux plans perpendiculaires à l'axe de révolution de la surface conique de révolution, et entre deux droites génératrices de la surface tronconique de révolution.

Chaque zone d'affichage courbe 10, 12 est ici formée par un seul écran 8, 14 d'affichage ayant une forme coïncidant avec celle de la zone d'affichage courbe 10, 12 correspondante.

Avantageusement, lorsque la surface d'affichage 6 comprend une zone d'affichage courbe 10 concave et une zone d'affichage courbe 12 convexe adjacentes, celles-ci sont formées respectivement par un écran d'affichage 8 concave et un écran d'affichage 14 convexe jointifs par des bords rectilignes 8A, 14A respectifs.

L'écran d'affichage 8 concave et l'écran d'affichage 14 ont chacun la forme d'une surface développable, en particulier une portion de surface conique, plus particulièrement ici une portion de surface conique de révolution.

De préférence, l'écran d'affichage 8 concave et l'écran d'affichage 14 ont chacun la forme d'une portion de surface tronconique de révolution délimitée entre deux plans parallèles perpendiculaire à l'axe de révolution de la surface conique de révolution, et deux droites directrices distinctes de la surface conique de révolution.

Dans un exemple de réalisation préféré, l'écran d'affichage 8 concave et l'écran d'affichage 14 convexe ont des bords rectilignes 8A, 14A de même longueur. Ceci permet de disposer les écrans d'affichage 8, 14 par leurs bords rectilignes 8A, 14A de manière qu'ils se prolongent l'un l'autre.

En option, l'écran d'affichage 8 concave et l'écran d'affichage 14 convexe ont des bords curvilignes courts de même rayon de courbure et des bords curviligne longs de même rayon de courbure.

Dans ce cas les écrans 8 et 14 sont par exemple issus d'une même forme plane courbée sur une surface concave pour l'écran 8 et pivotée de 180° puis courbée sur une surface convexe pour l'écran 14. Les coûts de développement sont ainsi minimisés en utilisant la même forme de départ.

L'écran d'affichage 14 convexe est disposé de façon que son bord curviligne 14B long définit un bord inférieur de la zone d'affichage courbe 12 convexe et que son bord curviligne 14C court définit un bord supérieur de la zone d'affichage courbe 12 convexe.

D'une manière générale, on pourrait avoir des écrans d'affichage 8, 14 concaves et convexes avec des bords longs de rayons de courbure différents et/ou des bords courts de rayons de courbure différents, avec par exemple des matrices de pixels différentes entre écrans concaves et convexes.

De préférence, l'écran d'affichage 14 convexe est disposé tête-bêche par rapport à chaque écran d'affichage 8 concave avec lequel il est jointif.

Avantageusement, le bord curviligne 14B long de l'écran d'affichage convexe prolonge le bord curviligne 8B court de chaque écran d'affichage 8 concave jointif et/ou le bord curviligne court 14C de l'écran d'affichage 14 convexe prolonge le bord curviligne 8C long de chaque écran d'affichage 8 concave jointif.

L'utilisation de tels écrans d'affichage 8, 14 concave et convexe disposés tête-bêche permet de former une surface d'affichage courbe ayant la forme d'une bande ondulante avec une alternance de zones d'affichage 10, 12 concave et convexe. Une telle bande est particulièrement ergonomique pour la réalisation d'un poste de pilotage pour deux pilotes. Dans l'exemple de réalisation de la Figure 2, chaque zone d'affichage courbe 10, 12 est formée d'un seul écran d'affichage. En variante, au moins une zone d'affichage courbe 10, 12 est formée de plusieurs écrans d'affichage jointifs.

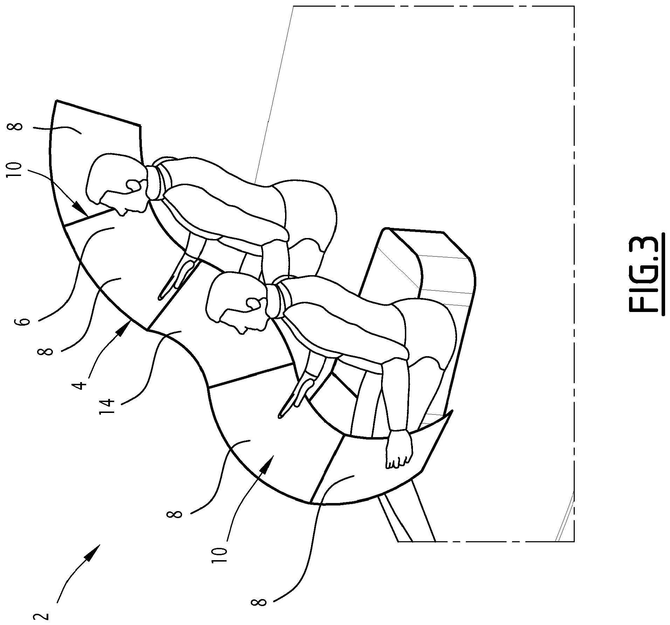

Le poste de pilotage de la Figure 3 diffère de celui de la Figure 2 en ce que chaque zone d'affichage courbe 10 concave est formée de deux écrans d'affichage 8 jointifs disposés côte à côte.

Dans l'exemple illustré, les deux écrans d'affichage 8 formant chaque zone d'affichage courbe 10 sont différents, l'un étant plus large que l'autre.

Dans une variante possible, une seule zone d'affichage courbe 10 concave est formée de plusieurs écrans d'affichage 8 jointifs disposés côte à côte, l'autre zone d'affichage courbe 10 concave étant formée d'un seul écran d'affichage 8.

Par ailleurs, en option ou en variante, la surface d'affichage comprend au moins une zone d'affichage courbe 12 convexe formée de plusieurs écrans d'affichage 8 jointifs.

De manière générale, la surface d'affichage 6 comprend au moins une zone d'affichage courbe 10 concave formée d'un seul écran d'affichage 8, au moins une zone d'affichage courbe 10 concave formée de plusieurs écrans d'affichage 8, jointifs, au moins une zone d'affichage courbe 12 convexe formée de plusieurs écrans d'affichage 14 jointifs, et/ou au moins une zone d'affichage courbe 12 convexe formée d'un seul écran d'affichage 14.

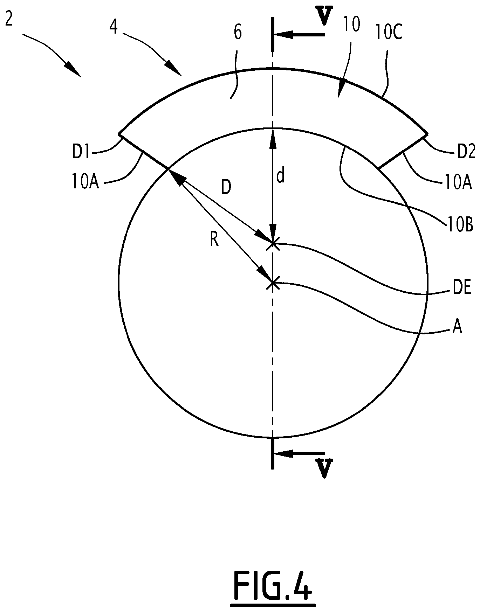

La Figure 4 illustre une vue de dessus d'une zone d'affichage courbe 10 concave dédiée à un pilote, et la Figue 5 illustre la zone d'affichage en section selon V-V sur la Figure 4.

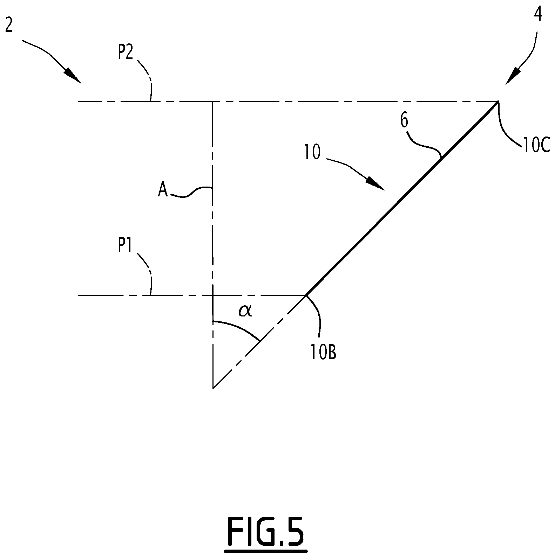

La zone d'affichage courbe 10 concave est une portion de surface tronconique de révolution ayant un axe de révolution A, située entre deux plans parallèles P1, P2 (Figure 5) distincts perpendiculaire à l'axe de révolution A, et deux segments de droites génératrices D1, D2 de la surface conique de révolution (Figure 4). Les segments de droites génératrices D1, D2 correspondent aux bords latéraux 10A de la zone d'affichage courbe 10.

Sur les Figures 4 et 5, le point de vision DE représente la position d'un point de vision théorique d'un pilote assis devant la zone d'affichage, pour la conception de la zone d'affichage.

L'axe de révolution A de la surface conique est sensiblement vertical (Figure 4). Par ailleurs, en section dans un plan vertical (Figure 5), la zone d'affichage courbe conique s'étend obliquement en étant tournée vers le haut.

De préférence, en vue de dessus, le point de vision DE est situé entre l'axe de révolution A et le point du bord inférieur de la zone d'affichage situé devant le pilote.

Ainsi, la distance d entre le point de vision DE et le point du bord inférieur de la zone d'affichage situé devant le pilote est inférieure au rayon de courbure R du bord inférieur 10B.

De préférence, le rayon de courbure du bord interne est choisi de telle manière qu'une distance d entre le point de vision DE et le point du bord inférieur de la zone d'affichage situé devant le pilote est strictement inférieure à une distance D entre le point de vision DE et chaque extrémité du bord inférieur 10B de la zone d'affichage courbe 10.

Des valeurs typiques sont une distance d comprise entre 400 et 450 mm, par exemple environ 430 mm, et une distance D comprise entre 550 et 600 mm, par exemple environ 580.

Par ailleurs, de préférence, le demi-angle au sommet α (Figure 5) de la surface conique de révolution associée à chaque zone d'affichage courbe conique ayant la forme d'une portion de surface conique de révolution est compris entre 30 et 55°.

Le demi-angle au sommet de la surface conique de révolution est l'angle défini à l'intérieur de la surface conique de révolution entre l'axe de révolution A de la surface conique de révolution et une droite directrice de la surface conique de révolution.

La plage angulaire spécifiée permet d'obtenir une zone d'affichage courbe ayant une ergonomie satisfaisante, en terme de visibilité des images pour le pilote et d'accessibilité, par exemple lorsque la zone d'affichage courbe est au moins en partie tactile pour permettre au pilote d'interagir avec le système d'affichage.

La réalisation d'une surface d'affichage d'image formée d'un écran d'affichage ou plusieurs écrans d'affichage jointifs permet de proposer une surface d'affichage étendue. Ceci permet d'augmenter le nombre d'informations affichées simultanément, et d'améliorer le partage d'information entre pilotes.

La prévision d'une zone d'affichage courbe ayant la forme d'une surface développable, en particulier une portion de surface conique, encore plus en particulier d'une telle zone d'affichage pour chaque pilote, permet d'obtenir une ergonomie satisfaisante.

La zone d'affichage courbe permet de conformer la surface d'affichage à l'enveloppe d'accessibilité de chaque pilote pour une interaction plus facile.

Cela permet de réduire les efforts musculaires pour les pilotes pour interagir avec la surface d'affichage lorsque celle-ci est au moins partiellement tactile, et améliore la stabilité des doigts des pilotes, ce qui permet une utilisation plus précise et plus facile.

La réalisation de la surface d'affichage avec plusieurs écrans d'affichage jointifs permet de maximiser la surface d'affichage et d'afficher des formats à cheval sur plusieurs écrans. Elle facilite également l'échange d'information entre les pilotes, par exemple en leur permettant de déplacer une image générée sur la surface d'affichage d'un pilote vers l'autre pour partager une information contenue dans cette image.

La réalisation de la surface d'affichage avec plusieurs écrans d'affichage jointifs fournit également un gain de sécurité en permettant au système d'affichage de continuer à fonctionner dans un mode dégradé, y compris lorsqu'un des écrans d'affichage est défaillant. En particulier, au moins une ou chaque zone d'affichage peut être réalisée à l'aide de plusieurs écrans d'affichage jointifs.

Pour la réalisation des systèmes d'affichage décrit, un écran d'affichage ayant la forme d'une portion de surface conique, notamment d'une portion de surface conique de révolution, est par exemple formé en fournissant un écran d'affichage flexible en forme de secteur angulaire de couronne circulaire, et en fixant cet écran flexible sur une surface de support rigide qui est une portion de surface tronconique de révolution.

Un écran d'affichage flexible est par exemple un écran à OLEDs, un écran à Micro-LED, un écran LCD sur verre aminci ou un écran LCD sur plastique.

En variante, un tel écran d'affichage est formé en fixant des éléments générateurs de lumière tels que des LEDs, des OLEDs ou des Micro-LED sur une surface de support qui est une portion de surface tronconique de révolution.

L'invention n'est pas limitée aux exemples de réalisation décrit, des variantes étant envisageables.

Par exemple, les systèmes d'affichage des exemples de réalisation des Figures 1 à 3 possèdent plusieurs écrans d'affichage distincts qui sont disposés jointifs pour former une surface d'affichage plus étendue que chaque écran d'affichage.

Dans une variante, la surface d'affichage est formée par un seul écran d'affichage courbe définissant une zone d'affichage courbe ayant la forme d'une surface développable, en particulier conique, ou plusieurs zones d'affichages courbes ayant la forme de surfaces développables, en particulier coniques.

Par ailleurs, dans les modes de réalisation décrits, les surfaces d'affichage comprennent exclusivement des zones d'affichages courbes ayant la forme d'une surface développable, en particulier une portion de surface conique.

Dans des variantes, il est envisageable qu'une surface d'affichage possède au moins une zone d'affichage non-courbe et/ou une zone d'affichage courbe mais non-développable ou non-conique, par exemple au moins une zone d'affichage plane et/ou au moins une zone d'affichage courbe ayant la forme d'une portion de surface cylindrique.

## Revendications

1. Système d'affichage électronique d'images pour poste de pilotage de véhicule, le système d'affichage possédant une surface d'affichage (6) tridimensionnelle non-plane définie par un écran d'affichage (8) électronique ou plusieurs écrans d'affichage (8, 14) électroniques jointifs, la surface d'affichage (6) ayant au moins une zone d'affichage courbe (10, 12) ayant la forme d'une surface développable, dans lequel au moins une ou chaque zone d'affichage courbe (10, 12) ayant la forme d'une surface développable a la forme d'une portion de surface conique.

2. Système d'affichage selon la revendication 1, dans lequel chaque zone d'affichage courbe (10, 12) de la surface d'affichage (6) est une zone d'affichage courbe ayant la forme d'une surface développable.

3. Système d'affichage selon la revendication 1 ou la revendication 2, dans lequel au moins une zone d'affichage courbe (10, 12) ayant la forme d'une surface développable est définie par un seul écran d'affichage (8) et/ou au moins une zone d'affichage courbe ayant la forme d'une surface développable est définie par plusieurs écrans (8 ; 14) d'affichage jointifs.

4. Système d'affichage selon l'une quelconque des revendications précédentes, dans lequel la surface d'affichage (6) est constituée de plusieurs zones d'affichage courbes (10, 12) ayant chacune la forme d'une surface développable.

5. Système d'affichage selon l'une quelconque des revendications précédentes, dans lequel au moins une ou chaque zone d'affichage courbe (10, 12) ayant la forme d'une surface développable a la forme d'une portion de surface conique de révolution.

6. Système d'affichage selon l'une quelconque des revendications précédentes, dans lequel chaque écran d'affichage (8, 14) définissant, en totalité ou en partie, une zone d'affichage courbe (10, 12) ayant la forme d'une surface développable a la forme d'une portion de surface conique, en particulier d'une portion de surface conique de révolution.

7. Système d'affichage selon l'une quelconque des revendications précédentes, dans lequel au moins un écran d'affichage (8, 14) a la forme d'une portion de surface conique de révolution, délimitée entre deux plans parallèles perpendiculaire à l'axe de révolution de la surface conique de révolution, et deux plans axiaux distincts incluant l'axe de révolution en faisant un angle non nul entre eux.

8. Système d'affichage selon l'une quelconque des revendications précédentes, dans lequel la surface d'affichage (6) est constituée d'un ou plusieurs écrans d'affichage (8, 14) ayant chacun la forme d'une portion de surface tronconique de révolution, délimitée entre deux plans parallèles perpendiculaire à l'axe de révolution de la surface tronconique de révolution, et deux plans axiaux distincts incluant l'axe de révolution en faisant un angle non nul entre eux.

9. Système d'affichage selon l'une quelconque des revendications précédentes, dans lequel au moins une zone d'affichage courbe (10) est concave et/ou au moins une zone d'affichage courbe (12) est convexe.

10. Système d'affichage selon l'une quelconque des revendications précédentes, dans lequel la surface d'affichage comprend trois zones d'affichage courbes (10, 12) adjacentes incluant une zone d'affichage courbe (12) convexe située entre deux zones d'affichage courbes (10) concaves.

11. Poste de pilotage de véhicule, par exemple d'aéronef, comprenant un système d'affichage électronique selon l'une quelconque des revendications précédentes.

## Patentansprüche

1. Elektronisches Bildanzeigesystem für ein Cockpit eines Fahrzeugs, wobei das Anzeigesystem eine dreidimensionale, nicht-planare Anzeigefläche (6) besitzt, die durch einen elektronischen Anzeigebildschirm (8) oder mehrere aneinandergrenzende elektronische Anzeigebildschirme (8, 14) definiert ist, die Anzeigefläche (6) mindestens einen gekrümmten Anzeigebereich (10, 12) aufweist, der die Form einer entwickelbaren Fläche aufweist, wobei mindestens ein oder jeder gekrümmte Anzeigebereich (10, 12) die Form einer entwickelbaren Fläche mit der Form eines kegelförmigen Flächenabschnitts aufweist.

2. Anzeigesystem nach Anspruch 1, wobei jeder gekrümmte Anzeigebereich (10, 12) der Anzeigefläche (6) ein gekrümmter Anzeigebereich ist, der die Form einer entwickelbaren Fläche aufweist.

3. Anzeigesystem nach Anspruch 1 oder 2, wobei mindestens ein gekrümmter Anzeigebereich (10, 12) in Form einer entwickelbaren Fläche durch einen einzelnen Anzeigebildschirm (8) definiert ist und/oder mindestens ein gekrümmter Anzeigebereich in Form einer entwickelbaren Fläche durch mehrere aneinandergrenzende Anzeigebildschirme (8; 14) definiert ist.

4. Anzeigesystem nach einem der vorherigen Ansprüche, wobei die Anzeigefläche (6) aus mehreren gekrümmten Anzeigebereichen (10, 12) besteht, die jeweils die Form einer entwickelbaren Fläche aufweisen.

5. Anzeigesystem nach einem der vorherigen Ansprüche, wobei mindestens ein oder jeder gekrümmte Anzeigebereich (10, 12), der die Form einer entwickelbaren Fläche aufweist, die Form eines Abschnitts einer rotationskegelförmigen Fläche aufweist.

6. Anzeigesystem nach einem der vorherigen Ansprüche, wobei jeder Anzeigebildschirm (8, 14), der ganz oder teilweise einen gekrümmten Anzeigebereich (10, 12) definiert, der die Form einer entwickelbaren Oberfläche aufweist, die Form eines kegelförmigen Oberflächenabschnitts, insbesondere eines rotationskegelförmigen Oberflächenabschnitts, aufweist.

7. Anzeigesystem nach einem der vorherigen Ansprüche, wobei mindestens ein Anzeigebildschirm (8, 14) die Form eines Abschnitts einer rotationskegelförmigen Oberfläche aufweist, die zwischen zwei parallelen Ebenen senkrecht zu der Rotationsachse der rotationskegelförmigen Oberfläche und zwei getrennten axialen Ebenen, die die Rotationsachse einschließen und einen Winkel ungleich Null untereinander bilden, abgegrenzt ist.

8. Anzeigesystem nach einem der vorherigen Ansprüche, wobei die Anzeigefläche (6) aus einem oder mehreren Anzeigebildschirmen (8, 14) besteht, die jeweils die Form eines Abschnitts einer rotationskegelstumpfförmigen Oberfläche aufweisen, die zwischen zwei parallelen Ebenen senkrecht zu der Rotationsachse der rotationskegelstumpfförmigen Oberfläche und zwei verschiedenen axialen Ebenen, die die Rotationsachse einschließen und einen von Null verschiedenen Winkel zwischen ihnen bilden, begrenzt ist.

9. Anzeigesystem nach einem der vorherigen Ansprüche, wobei mindestens ein gekrümmter Anzeigebereich (10) konkav ist und/oder mindestens ein gekrümmter Anzeigebereich (12) konvex ist.

10. Anzeigesystem nach einem der vorherigen Ansprüche, wobei die Anzeigefläche drei benachbarte gekrümmte Anzeigebereiche (10, 12) umfasst, die einen konvexen gekrümmten Anzeigebereich (12) einschließen, der sich zwischen zwei konkaven gekrümmten Anzeigebereichen (10) befindet.

11. Cockpit eines Fahrzeugs, z. B. eines Flugzeugs, umfassend ein elektronisches Anzeigesystem nach einem der vorherigen Ansprüche.

## Claims

1. Electronic image display system for a vehicle cockpit, the display system having a non-planar three-dimensional display surface (6) defined by an electronic display screen (8) or multiple contiguous electronic display screens (8, 14), the display surface (6) having at least one curved display area (10, 12) in the form of a developable surface, wherein at least one or each curved display area (10, 12) in the form of a developable surface has the form of a portion of a conical surface.

2. Display system according to claim 1, wherein each curved display area (10, 12) of the display surface (6) is a curved display area in the form of a developable surface.

3. Display system according to claim 1 or claim 2, wherein at least one curved display area (10, 12) in the form of a developable surface is defined by a single display screen (8) and/or at least one curved display area in the form of a developable surface is defined by a plurality of contiguous display screens (8; 14).

4. Display system according to any one of the preceding claims, wherein the display surface (6) consists of a plurality of curved display areas (10, 12) each having the form of a developable surface.

5. Display system according to any one of the preceding claims, wherein at least one, or each, curved display area (10, 12) in the form of a developable surface is in the form of a portion of a conical surface of revolution.

6. Display system according to any one of the preceding claims, wherein each display screen (8, 14) defines, in whole or in part, a curved display area (10, 12) having the shape of a developable surface is in the form of a portion of a conical surface, in particular a portion of a conical surface of revolution.

7. Display system according to any one of the preceding claims, wherein at least one display screen (8, 14) has the shape of portion of a conical surface of revolution delimited between two parallel planes perpendicular to the axis of revolution of the conical surface of revolution, and two distinct axial planes including the axis of revolution by making a non-zero angle between them.

8. Display system according to any one of the preceding claims, wherein the display surface (6) comprises one or more display screens (8, 14) each having the shape of a portion of a frustoconical surface of revolution, delimited between two parallel planes perpendicular to the axis of revolution of the frustoconical surface of revolution, and two distinct axial planes including the axis of revolution with making a non-zero angle between them.

9. Display system according to any one of the preceding claims, wherein at least one curved display area (10) is concave and/or at least one curved display area (12) is convex.

10. Display system according to any one of the preceding claims, wherein the display surface comprises three contiguous curved display areas (10, 12) including a convex curved display area (12) located between two curved concave display areas (10).

11. Vehicle cockpit, for example of an aircraft, comprising an electronic display system according to any one of the preceding claims.
